# EUROPEAN PATENT APPLICATION

(11) **EP 1 134 735 A1**
(43) Date of publication of application: **19.09.2001**
(21) Application number: 00105277.8
(22) Date of filing: 14.03.2000
(51) Int. Cl.: G11B 7/24, G06K 19/06, G11B 23/40, G11B 7/26

(54) **Name card and method of manufacturing the same**

(71) Applicant: UNIDISC TECHNOLOGY CO., LTD., Shin-Tien, Taipei, Taiwan (CN)
(72) Inventor: Lin, Tsang-Yih, Shin-Tien, Taipei, Taiwan (TW)
(74) Representative: Grünecker, Kinkeldey, Stockmair & Schwanhäusser Anwaltssozietät

(57) **Abstract**

Disclosed is an integrally molded name card compact disc, such as CD-ROM, and method of manufacturing the same, in which the said name card compact disc consists of an integral plastic substrate, a metal coating layer, a protective layer and a printing layer. To be used as a normal name card, therefore, the said name card compact disc has the size as a normal name card and has the digital data encoded thereon, and for protecting the digital data from being scratched, from the lower surface of the name card compact disc project two arc ridges so that the name card compact disc can be mounted on a loading tray of a typical disc reader to read the digital data encoded thereon. Moreover, the protective layer of the name card compact disc is a substantially flat plane so as to be printed by offset or screen printing.

## Description

### Field of the Invention

This invention relates to a non-circular compact disc such as CD-ROM (compact disc-read only memory) with non-circular shape and method of manufacturing the same, particularly this invention relates to an integrally molded name-card compact disc and method of manufacturing the same.

### Background of the Invention

Recently, as the computer technology has been more developed, the digital data required to store or communicate becomes more enormously and expanding. It has been desired therefore to provide a large volume store element. At present, the large volume store element of digital data such as the optical compact disc (CD) is typically used. However, most of the optical compact disc is round shape, the dimension and the shape of which is not conveniently portable.

Moreover, the data such as resume, briefing of company, catalog and the like, are usually exchanged for business trade, or the medical literalness and image data such as case history, medical record, electrocardiogram (ECG), X-ray image and the like, are in portable need for medical treatment or first aid. It is substantially practicable to provide a name-card-like element, which can store and communicate large digital data. Therefore, it also has been desired to provide an integrally molded name card compact disc having substantially large digital data volume stored and communicated compatible with the typical disc reader. Moreover, it is preferable that the surface of the name card compact disc can be provided with good appearance of visual printing pattern, and then it can stipulate the motivation of usage.

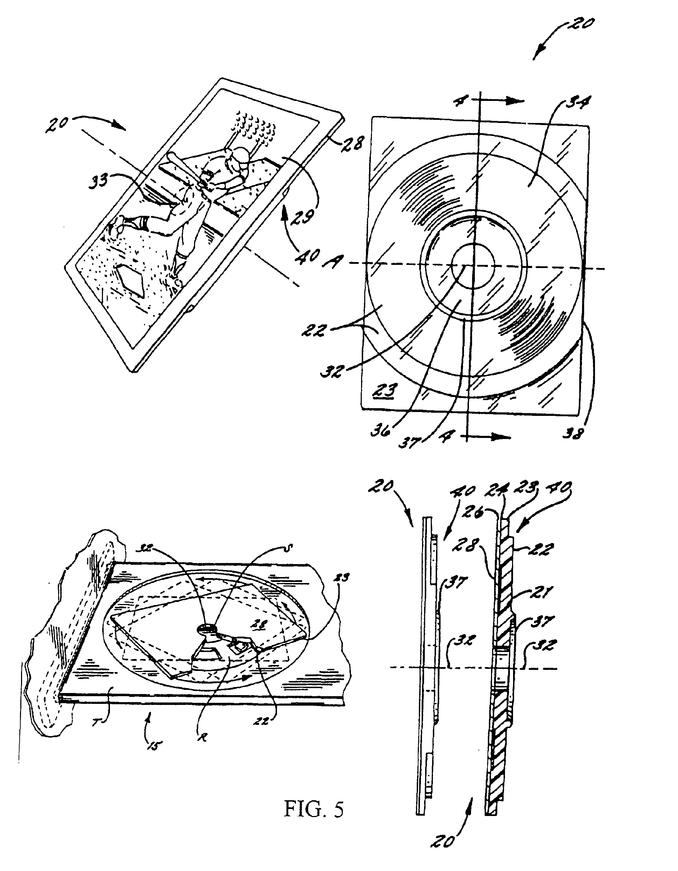

By referring U.S. patent No. 5,982,736 disclosed as the title of "Trading card optical compact disc and methods of using and forming same" by G.A. Pierson issued on November 9th 1999, in which a elevational portion 221(show as Fig.5) of the trading card is used for mounting the trading card onto a loading tray of a typical disc reader. As the data surface provided with the elevational portion 221 for mounting the compact disc, the elevational portion 221 should be carefully kept from being scratched by an unmindful force, which will cause errors of data reading in the trading card. Furthermore, the trading card is of dimension 2.5× 3.5 inch, which is substantially larger than that of the name card, and is not adopted to be used as a normal name card.

Conventionally known name card compact disc is first manufactured as an entirely circular compact disc by the known skill in the art, and then by means of die-punching to form the name card compact disc with four die projections which are projected from the four comers of the bottom surface of the name card compact disc, and four die recesses which are provided on the four corresponding corners of the top surface thereof. The four projections of the name card compact disc in the four corners can rest against a recess seating ring of 8 cm in diameter of a loading tray in a typical disc reader. However, the four projections are made by die-punching, it is difficult to control the shape and dimension of each projection precisely, thus the name card compact disc may not be firmly mounted against the loading tray, and error during data reading will be caused. Also, four recesses will be provided on the upper surface of the name card compact disc, so that the name card compact disc only can be printed by screen printing, not by offset printing, thus the pattern printed on the upper surface of the name card compact disc may not be implemented for better aesthetics.

Moreover, the above mentioned name card compact disc is formed by die-punching a entirely circular compact disc, thus the sharp edges(burrs) may be occurred on the name card compact disc which is not suitable for users. The internal stress formed during die-punching is often remained, and this always damage the digital data storing zone, thus the reliability of the data stored in the name card compact disc would be affected.

### Summary of the Invention

Therefore, it is an object of this invention to provide a novel compact disc, which profile is equal to that of a conventional name card, and is compatible with a typical compact disc reader. Also, the name card compact disc with dimension like conventional name card is convenient to be carried, and can be stored and communicated much more data than that of a conventional name card.

It is another object of this invention to provide an integrally molded name card compact disc with a plain upper surface so as to adapt for offset printing or screen printing, and provide vivid printing patterns on the upper surface of the name card compact disc.

A further object of this invention is to provide the lower surface of the name card compact disc with two arc rides, which can be engaged with a recess seating ring of 8 cm in diameter on a loading tray of a typical disc reader, and mounted the name card compact disc on the loading tray of the typical disc reader so as to allow the reading head of the typical disc reader to read the digital data stored therein.

A still further object of this invention is to provide the dimension of a name card compact disc is about 8.5x5.5cm, somewhat smaller than 9.0x5.5cm of that of a conventional name card, so as to allow the name card compact disc to be contained in a name card case. wallet and the like.

It is also another object of this invention to provide a name card compact disc with the digital data storing zone which is a circular of about 5 cm in diameter, so as to store about 40 MB (Megabyte) of data therein in some compact disc formats, such as audio or CD-ROM, and also store more than that of other compact disc formats, such as digital video disc (DVD).

A still further object of this invention is to provide a name card compact disc with the digital data storing zone which compact disc is easily portable and can be stored the personal information, such as basic information and resume. and medical record for medical treatment or first aid.

It is also another object of this invention to provide a method of manufacturing the name card compact disc, in which the name card compact disc consists of a substrate, a metal coating layer, a protective layer, and a printing layer, and the manufacturing steps included as follows:
Molding integrally the substrate to form it with two ridges on a side surface and die-pressed digital data patterns in a circle of about 5cm in diameter on the other side surface. The dimension of the substrate is about equal to that of a conventional name card. Also, by the sensing means and orienting means the formed substrate can be introduced automatically into next step properly to coat the metal coating layer;
To coat the digital data pattern of the formed substrate with the metal coating layer, and by the sensing means and orienting means the substrate coated with the metal coating layer can be introduced automatically into next step properly to coat the protective layer;
To coat the metal coating layer of the substrate with the protective layer, and by the sensing means and orienting means the substrate coated with the protective layer can be introduced automatically into next step properly to print the visual pattern; and
To print the visual pattern on the protective layer.

A still further object of the present invention is to provide the method of manufacturing the name card compact disc, in which the substrate of the name card compact disc molded integrally provides two ridges, and the angle between the slant of the ridge and the plane of the substrate ranges about 40° ∼50°, and preferable is 45°.

It is also another object of the present invention to provide the method of manufacturing the name card compact disc, in which the substrate of the name card compact disc is molded integrally of plastic material.

A still further object of the present invention is to provide the method of manufacturing the name card compact disc, in which the metal coating layer of the name card compact disc is a circle of about 5.0cm in diameter.

In contrast to the method of manufacturing the name card compact disc, the circular compact disc of the prior art dose not has directionality, during the manufacturing process the circular center of the compact disc thus only needs positioning, and for the sensing means, such as infrared finder, also only the circular center is need to sense and orient. However, for the name card compact disc manufactured according to this present invention, the profile of which is name-card-like, that is rectangular, thus the sensing means and orienting means is indispensable to properly sense and orient the name card compact disc at the each steps of the method according to the present invention.

For the name card compact disc according to this present invention, the substrate can be made of polymethyl methacrylate(PMMA), polycarbonate(PC), and ARTON®(norbornene having polyester functional group, main chain: norbornene, side chain: polyester functional group).

Moreover, for the name card compact disc according to this present invention, the loading tray of the typical disc reader provides an opening for passing the reading head therethrough, as the opening of a old-fashioned reader is sector and large, the name card compact disc according present invention will get ditched such that reading the digital data thereof will be error. However, the opening of the tray of the new-fashioned reader is rectangular and small, the digital data of the name card compact disc according present invention can be read.

### Brief description of drawing

Some of the features, advantages, and benefits of the present invention having been stated hereinbefore, others will become apparent as the description proceeds when taken in conjunction with the accompanying drawings in which:

Fig. 1a is a bottom plan view of a name card compact disc according to an embodiment of this invention, and the reference numeral 10 substantial indicates the name card compact disc.

Fig. 1b is a longitudinal sectional view of the name card compact disc 10 in the Fig.1a.

Fig. 2 is an enlargement view of the section B of the name card compact disc 10 in the Fig.1b.

Fig. 3 is an exploded view of a name card compact disc manufactured by means of the method according to the present invention, which shows the name card compact disc assembled in the order of manufacturing steps from bottom to top.

Fig. 4 is a illustrative view showing the name card compact disc according to the present invention mounted on a loading tray of a typical disc reader, in which the two ridges of the name card compact disc entirely are mounted against a corresponding arc of a seating ring of a loading tray of a typical disc reader.

Fig.5 is an illustrative view showing the trading optical compact disc according to prior art mounted on a loading tray of a typical disc reader, in which the elevational portion of the trading optical compact disc is mounted into a seating ring of a loading tray of a typical disc reader.

### Detail description of this invention

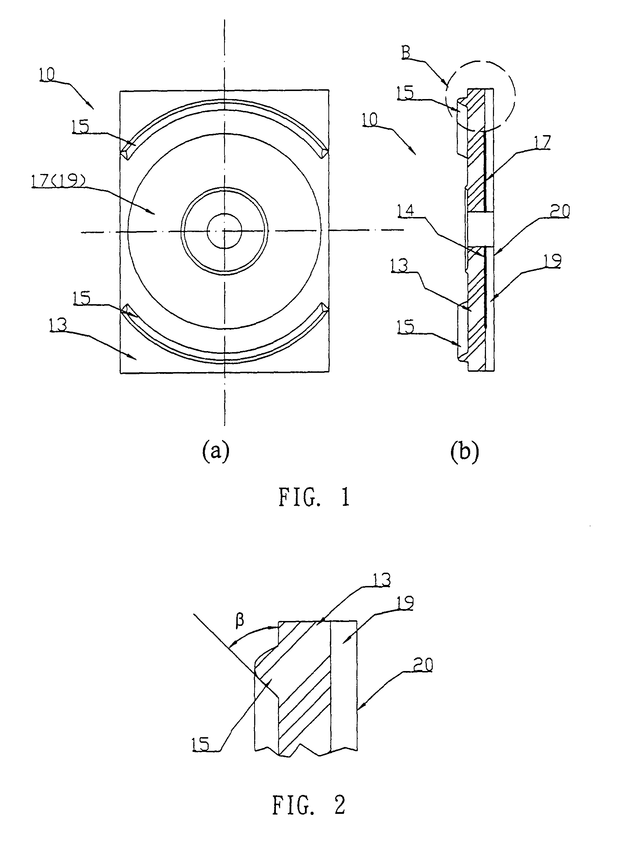

Fig.1a and Fig.1b illustrate a name card compact disc 10 of a embodiment according to this invention, Fig.1a show a bottom elevational view of the name card compact disc 10, in which the name card compact disc 10 consists of a substrate 13 with the dimension of a typical name card, two arc ridges 15, and a metal coating layer with a protective layer 19 applied thereon. By means of the pattern 14 molding on the substrate 13 and the metal coating layer 17, the name card compact disc 10 can encode digital data. such as document, picture, audio, video and the like, which can be read by the reading head of a typical compact disc reader. Fig.1b is a longitudinal section view of the embodiment showing in the Fig.1a according to the present invention, the name card compact disc 10 has substantial elongated profile, and provide with two tiny arc ridges 15 projected from the lower surface of the substrate 13. Also. the thickness of the name card compact disc 10 is thinner than that of the typical so as to be put into somewhere to place a name card, such as pocket, name card folder and the like such that the name card compact disc according present invention can be used as a name card.

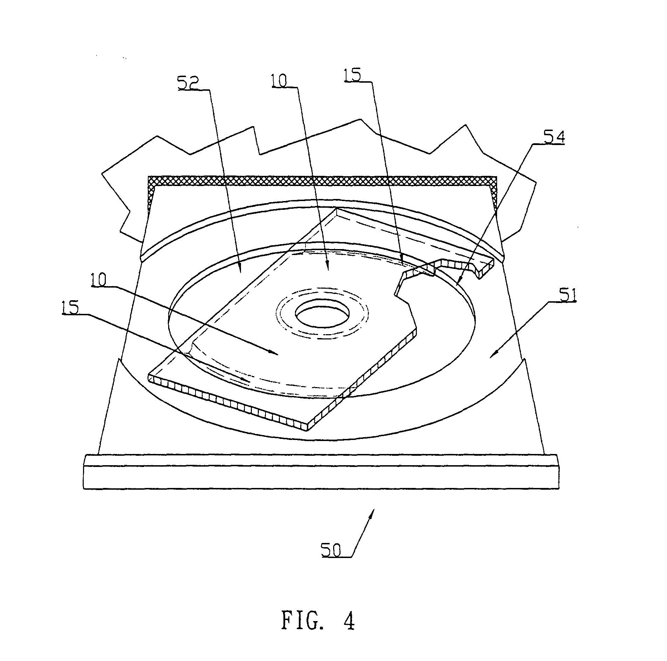

A loading tray 50 of a typical disc reader provides a recess seating ring 51 of 12cm in diameter and a recess seating ring 52 of 8cm in diameter, a vertical edge inside wall 54 of the recess seating ring 52 of 8cm in diameter is formed therebetween. The two arc ridges 15 of the name card compact disc 10 can be mounted against the vertical edge inside wall 54 of the recess seating ring 52 of 8cm in diameter (showing as Fig. 4) such that the name card compact disc 10 can be mounted on the loading tray of the typical disc reader so as to allow the reading head of the typical disc reading to read the digital data stored thereon. Thus, when the two ridges 15 of the name card compact disc 10 are mounted against the recess seating ring 52 of 8cm in diameter, the said compact disc 10 can be securely seated to keep the said compact disc 10 from data reading error due to detachment from the loading tray 50,

Also, the angle β between the slant of the ridge of the name card compact disc 10 and the plane of the substrate 13 is ranges about 40° ∼50° ,and preferable is 45° . When reading digital data stored in the name card compact disc 10 in the disc reader, the name card compact disc 10 will be speedily rotated, if the angle β set smaller than 40°, the name card compact disc 10 will not be provided enough friction to seat, and may be deflected. However, if the angle β set larger than 50° , the friction due to the ridges 15 of the name card compact disc 10 will be provide too much friction, and the rotation may not be smooth, and error during data reading will be caused.

Moreover, as the ridges 15 are projected from the lower surface of the substrate 13, the data surface on the lower surface of the substrate 13 may not contact directly with the carrier placed the said compact disc 10, such as a desk, wallet and the like, such that the data surface on the lower surface of the substrate 13 is protected, and the digital data storing in the name card compact disc 10 are maintained completely,

Also, the metal coating layer 15 of the name card compact disc 10 used for storing the digital data is a circle of 5cm in diameter, that is, the peripheral zone of name card compact disc 10 is the plastic substrate 13, such that the outside surface of the metal coating layer 17 would not be damaged because of held by hand. The outside surface of the metal coating layer 17 can keep clarity, and the digital data storing in the name card compact disc 10 would keep well.

In an alternative embodiment (not show) according to this invention, the metal coating layer of the name card compact disc may also cover the entire upper surface of the substrate. For a bottom view, the entire plastic substrate is coated with a metal layer, the function and operation of the name card compact disc according the present invention will not be disturbed, and another aesthetic aspect is provided.

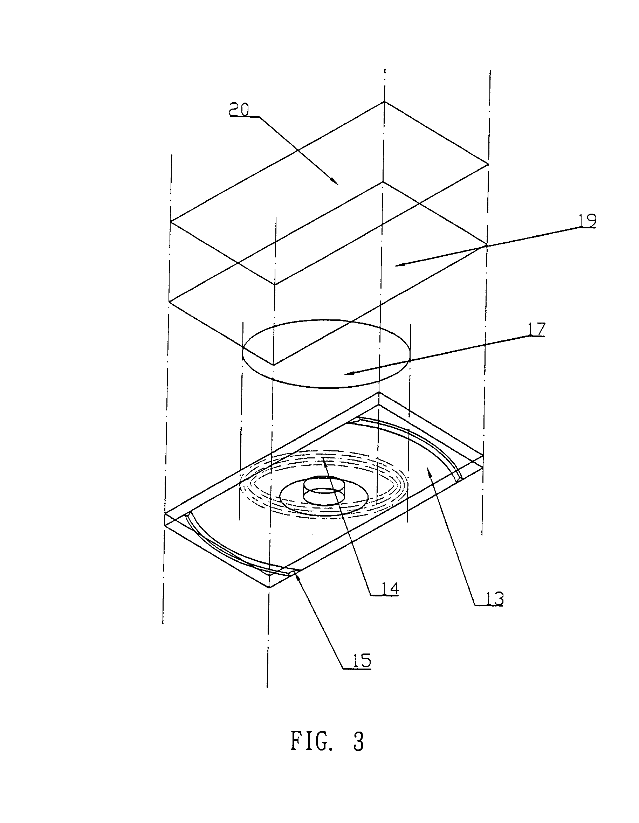

The method of manufacturing a name card compact disc according the present invention will be described hereinafter. As showing in Fig. 3, which is an exploded view of a name card compact disc manufactured by means of the method according to the present invention, which is assembled in the order of manufacturing steps from bottom to top. The manufacturing steps basically consist of:
Mold integrally the substrate 13. The dimension of the substrate 13 is about equal to the normal name card. Two ridges 15 are provided on a side surface and a digital data pattern 14 is molded in a circle of about 5cm in diameter on the other side surface. Also, by the sensing means and orienting means, the formed substrate 13 can be introduced automatically into next step properly to coat the metal coating layer;
Coat the digital data pattern 14 molded in a circle of 5cm in diameter with the metal coating layer 17, and by the sensing means and orienting means the substrate 13 coated with the metal coating layerl7can be introduced automatically into next step properly to coat the protective layer;
Coat the metal coating layer 17 with the protective layer 19, and by sensing means and orienting means with 4 point orientation of correctly 2-dimension relationship the substrate 13 coated with the protective layer 19 can be introduced automatically into next step properly to print the visual pattern; and

Print the visual pattern 20 on the protective layer 19.

During the molding process. the arc ridges 15 and the substrate 13 of the name card compact disc 10 are be molded integrally, and the arc ridges 15 is different from the name card compact disc made by prior art, such as die-casting or punching.

During the said process, the substrate 13 and the ridges 15 are integrally, and it is different from the prior art that the profile of the name card compact disc is rectangular, rather circular. Thus, for the processes of coating the metal coating layer and protective layer and the process of printing, the rectangular substrate 13 of the name card compact disc provides directionality, rather the circular substrate does not provide any directionality. The gravity center and the rotation momentum of the name card compact disc have to be arranged for each process steps. Therefore, the complex sensing means and orienting means are required for the each manufacturing process steps.

Moreover, for the process for coating the metal coating layer on the upper or data surface of the name card compact disc 10, the substrate 13 has been molded, so the process can coat only a circular zone of about 5cm in diameter, as showing in Fig.1, by means of modifying the mask. Thus, the coating zone of the metal coating layer on the data surface of the name card compact disc is a circle of about 5cm in diameter, such that the name card compact disc may store about 40MB of data in some compact disc formats. such as audio or CD-ROM, and also store more than that in others compact disc formats, such as digital video (DVD) by techniques known to those skill in the art.

However, there is particularly a need of orienting for the printing process. the name card compact disc 10 is rectangle rather circular. and is not geometric symmetry, thus the name card compact disc 10 must be properly oriented such that the printing process for the printing layer can be processing. Also, the upper or the printing layer of the name card compact disc 10 is a substantially flat plane so as to be printed by offset or screen printing.

It should be noted that the invention is not limited to the embodiment described and represented here by way of example, but it includes all technical equivalents as well as their combinations.

## Claims

1. A name card compact disc consists of a substrate, a metal coating layer, a protective layer, and a printing layer, the lower surface of the name card compact disc provide two ridges, which can be engaged with a recess seating ring of 8cm in diameter on a loading tray of a typical disc reader, and mounted the name card compact disc on the loading tray of the typical disc reader so as to allow the reading head of the typical disc reader to read the digital data stored therein.

2. A name card compact disc according to claim 1, wherein a angle between the arc ridge of the lower surface of the name card compact disc and the plane of the substrate thereof is ranges about 40° ∼50° .

3. A name card compact disc according to claim 2, wherein the angle between the arc ridge of the lower surface of the name card compact disc and the plane of the substrate thereof is about 45°

4. A name card compact disc according to claim 1, wherein the dimension of the name card compact disc is about 8.5x5.5cm, so as to allow the name card compact disc to be contained in a name card case, wallet and the like.

5. A name card compact disc according to claim 1, wherein the central part of the name card compact disc provides a circular zone of about 5cm in diameter for digital data storing zone.

6. A name card compact disc according to claim 5, wherein the digital data volume of the digital data storing zone of the name card compact disc is about 40 MB. and the format thereof is VCD or CD-ROM.

7. A name card compact disc according to claim 5, wherein the digital data format of the digital data storing zone of the name card compact disc is DVD.

8. A name card compact disc according to claim 5, wherein the digital data of the digital data storing zone of the name card compact disc may store the personal information, resume, and medical record.

9. A method of manufacturing the name card compact disc, wherein the name card compact disc consists of a substrate, a metal coating layer, a protective layer, and a printing layer, the manufacturing steps include:
Mold integrally the substrate with the dimension is about equal to a normal name card which two ridges are provided on a side surface and a digital data pattern is molded on the other side surface, and provide the sensing means and orienting means to introduce automatically the formed substrate into next step properly to coat the metal coating layer;
Coat the digital data pattern of the formed substrate with the metal coating layer. and provide the sensing means and orienting means to introduce automatically the substrate coated with the metal coating layer into next step properly to coat the protective layer;
Coat the metal coating layer of the substrate with the protective layer, and provide sensing means and orienting means to introduce automatically the substrate coated with the protective layer into next step properly to print the visual pattern; and
Print the visual pattern on the protective layer.

10. A method of manufacturing a name card compact disc according to claim 9. wherein the integral substrate of the name card compact disc provides two ridges.

11. A method of manufacturing a name card compact disc according to claim 10, wherein a angle between the ridge of the lower surface of the name card compact disc and the plane of the substrate thereof is ranges about 40° ∼50°.

12. A method of manufacturing a name card compact disc according to claim 10, wherein a angle between the ridge of the lower surface of the name card compact disc and the plane of the substrate thereof is about 45°.

13. A method of manufacturing a name card compact disc according to claim 9, wherein the substrate is made of polycarbonate(PC).

14. A method of manufacturing a name card compact disc according to claim 9, wherein the substrate is made of polymethyl methacrylate(PMMA).

15. A method of manufacturing a name card compact disc according to claim 9, wherein the substrate is made of ARTON®(norbornene having polyester functional group, main chain: norbornene, side chain: polyester functional group).

16. A method of manufacturing a name card compact disc according to claim 9, wherein the region of the metal coating of the name card compact disc is a circle of about 5cm in diameter.
